# DEMANDE DE BREVET EUROPEEN

(11) **EP 3 843 010 A1**
(43) Date de publication de la demande: **30.06.2021**
(21) Numéro de dépôt: 20216969.4
(22) Date de dépôt: 23.12.2020
(51) Int. Cl.: G06N 3/02, G06N 3/08, G06N 20/00

(54) **PROCÉDÉ D'ÉCHANGES DE DONNÉES ENTRE AU MOINS DEUX TERMINAUX ET DISPOSITIFS ASSOCIÉS**

(30) Priorité: 26.12.2019 FR 1915621
(71) Demandeur: THALES, 92400 Courbevoie (FR); COMMISSARIAT À L'ÉNERGIE ATOMIQUE ET AUX ÉNERGIES ALTERNATIVES, 75015 Paris (FR)
(72) Inventeur: FERRARI, Romain, 91120 PALAISEAU (FR); SAUSSET, François, 91767 PALAISEAU (FR); PIATTE, Cyrille, 91767 PALAISEAU (FR); LA ROCCA, Daria, 91767 PALAISEAU (FR); MARCE, Tarek, 91767 PALAISEAU (FR); SIRDEY, Renaud, 91120 PALAISEAU (FR)
(74) Mandataire: Lavoix

(57) **Abrégé**

La présente invention concerne un procédé d'échange de données entre des premiers terminaux (12) et un deuxième terminal (14) via un relais (16), chaque premier terminal (12) mémorisant un premier modèle associant à des entrées une sortie, chaque premier modèle provenant d'un apprentissage réalisé sur des données privées, le procédé comportant une étape de
- réception d'une requête demandant, pour une pluralité d'entrées, la sortie de chaque premier modèle,
- codage de chaque sortie,
- pour chaque entrée, sélection d'une sortie codée,
- décodage de chaque sortie codée sélectionnée,
- constitution d'un ensemble de données formé des sorties décodées et des entrées associées, et
- apprentissage d'un deuxième modèle associant à des entrées une sortie, l'apprentissage étant effectué à partir de l'ensemble de données constitué.

## Description

La présente invention concerne un procédé d'échanges de données entre des premiers terminaux et un deuxième terminal. La présente invention se rapporte également à des terminaux, une infrastructure de communication, un produit programme d'ordinateur et un support lisible d'informations associés.

Dans le domaine de l'intelligence artificielle, l'apprentissage se fait généralement par un serveur unique par entraînement d'une base de données d'apprentissage. L'apprentissage peut être supervisé ou non. Une telle technique suppose que le serveur unique ait accès à toutes les données de la base d'apprentissage. Cela pose des difficultés pour des données sécurisées.

Pour éviter un tel problème, il est connu de mettre en place de l'apprentissage fédéré en recourant à un tiers de confiance. L'apprentissage fédéré est une technique qui consiste à entraîner un modèle sur plusieurs serveurs d'utilisateurs différents à l'aide de bases de données puis à agréger les résultats de chacun.

Néanmoins, la confidentialité n'est pas parfaitement garantie, d'une part parce que le tiers a accès à toutes les informations et d'autre part parce que le modèle est partagé ce qui permet, par utilisation de modèle, à chaque utilisateur de reconstruire partiellement les données d'apprentissage même en l'absence de partage autorisé entre les utilisateurs.

Il existe donc un besoin pour un procédé d'échanges de données permettant la mise en oeuvre d'un apprentissage fédéré qui octroie une meilleure confidentialité aux participants à l'apprentissage fédéré.

Pour cela, la présente description porte sur un procédé d'échange de données entre des premiers terminaux et un deuxième terminal via un relais, chaque premier terminal comportant un premier émetteur, un premier récepteur et une première mémoire, chaque première mémoire mémorisant un premier modèle respectif, chaque premier modèle associant à des entrées au moins une sortie, chaque premier modèle étant issu d'un apprentissage réalisé à l'aide d'une base de données privées, le deuxième terminal comportant un deuxième émetteur, un deuxième récepteur et une deuxième mémoire, le procédé comportant au moins une étape de réception d'une requête demandant, pour une pluralité d'ensemble d'entrées, la au moins une sortie associée par le premier modèle mémorisé par la première mémoire du premier terminal, l'étape de réception étant mise en oeuvre par chaque premier terminal, une étape de calcul par le premier modèle de la au moins une sortie pour chaque ensemble d'entrées de la requête reçue, pour obtenir un ensemble de sorties, l'étape de calcul étant mise en œuvre par chaque premier terminal. Le procédé comporte également une étape de codage de chaque sortie, pour obtenir une pluralité de sorties codées, l'étape de codage étant mise en œuvre par chaque premier terminal et, pour chaque ensemble d'entrées, une étape de sélection parmi les sorties codées provenant de chaque premier modèle des premiers terminaux d'une sortie codée, l'étape de sélection étant mise en œuvre par le relais. Le procédé comporte aussi une étape de décodage de chaque sortie codée sélectionnée, l'étape de décodage étant mise en œuvre par le deuxième terminal, une étape de constitution d'un ensemble de données formé par l'ensemble des sorties décodées et ensemble d'entrées associées, l'étape de constitution étant mise en œuvre par le deuxième terminal, et une étape d'apprentissage d'un deuxième modèle associant à des entrées au moins une sortie, l'apprentissage étant effectué à partir de l'ensemble de données constitué, l'étape d'apprentissage étant mise en œuvre par le deuxième terminal.

Suivant des modes de réalisation particuliers, le procédé comprend une ou plusieurs des caractéristiques suivantes, prise(s) isolément ou suivant toutes les combinaisons techniquement possibles :
- lors de l'étape de codage, le codage est un chiffrement homomorphe.
- le deuxième modèle présente une architecture et des poids, le procédé comportant, en outre, pour chaque premier terminal d'une étape de réception d'au moins un parmi l'architecture et les poids provenant du deuxième terminal à travers le relais.
- lors de l'étape de sélection, une technique de vote avec ajout de bruit est utilisée.
- chaque modèle est distinct.

La présente description décrit également sur un terminal comportant un émetteur, un récepteur, une unité cryptographique, une mémoire et un contrôleur, la mémoire mémorisant un modèle, chaque modèle associant à des entrées au moins une sortie, le terminal étant propre à recevoir à l'aide du récepteur une requête demandant, pour une pluralité d'ensemble d'entrées, la au moins une sortie associée par le modèle mémorisé par la mémoire du terminal, à calculer avec le modèle la au moins une sortie pour chaque ensemble d'entrées de la requête reçue à l'aide du contrôleur, pour obtenir un ensemble de sorties, et à coder chaque sortie à l'aide de l'unité de cryptographie, pour obtenir une pluralité de sorties codées.

La présente description se rapporte aussi à un terminal comportant un émetteur, un récepteur, une unité cryptographique, une mémoire et un contrôleur, le terminal étant propre à échanger des données avec d'autres terminaux, dit terminaux privés, chaque terminal privé comportant un émetteur, un récepteur, une unité cryptographique, une mémoire et un contrôleur, chaque mémoire d'un terminal privé mémorisant un modèle privé, chaque modèle privé associant à des entrées au moins une sortie, le terminal étant propre à émettre à destination d'un relais une requête demandant, pour une pluralité d'ensemble d'entrées, la au moins une sortie associée par le modèle privé mémorisé par la mémoire de chaque terminal privé, à décoder chaque sortie codée sélectionnée, les sorties codées sélectionnées étant obtenues par sélection d'une sortie codée pour chaque ensemble d'entrées parmi les sorties codées provenant de chaque modèle privé des terminaux privés suite à l'émission de la requête, à constituer un ensemble de données formé par l'ensemble des sorties décodées et ensemble d'entrées associées, et à apprendre un deuxième modèle associant à des entrées au moins une sortie, l'apprentissage étant effectué à partir de l'ensemble de données constitué, l'étape d'apprentissage étant mise en œuvre par le deuxième terminal. La présente description décrit également sur une infrastructure de communication comportant des premiers terminaux, un deuxième terminal et un relais, chaque premier terminal comportant un premier émetteur, un premier récepteur et une première mémoire, chaque première mémoire mémorisant un premier modèle respectif, chaque premier modèle associant à des entrées au moins une sortie, le deuxième terminal) comportant un deuxième émetteur, un deuxième récepteur et une deuxième mémoire, l'infrastructure étant propre à mettre en œuvre un procédé d'échange de données entre les premiers terminaux et le deuxième terminal via un relais, le procédé comportant au moins une étape de réception d'une requête demandant, pour une pluralité d'ensemble d'entrées, la au moins une sortie associée par le premier modèle mémorisé par la première mémoire du premier terminal, l'étape de réception étant mise en œuvre par chaque premier terminal et une étape de calcul par le premier modèle de la au moins une sortie pour chaque ensemble d'entrées de la requête reçue, pour obtenir un ensemble de sorties, l'étape de calcul étant mise en œuvre par chaque premier terminal. Le procédé comportant aussi une étape de codage de chaque sortie, pour obtenir une pluralité de sorties codées, l'étape de codage étant mise en œuvre par chaque premier terminal et, pour chaque ensemble d'entrées, une étape de sélection parmi les sorties codées provenant de chaque premier modèle des premiers terminaux d'une sortie codée, l'étape de sélection étant mise en œuvre par le relais. Le procédé comporte également une étape de décodage de chaque sortie codée sélectionnée, l'étape de décodage étant mise en œuvre par le deuxième terminal, une étape de constitution d'un ensemble de données formé par l'ensemble des sorties décodées et ensemble d'entrées associées, l'étape de constitution étant mise en œuvre par le deuxième terminal, et une étape d'apprentissage d'un modèle d'apprentissage à partir de l'ensemble de données constitué, l'étape d'apprentissage étant mise en œuvre par le deuxième terminal.

La présente description se rapporte aussi à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape d'un procédé tel que précédemment décrit lorsque le programme d'ordinateur est mis en œuvre sur l'unité de traitement des données.

La présente description concerne également un support lisible d'informations comportant des instructions de programme formant un programme d'ordinateur, le programme d'ordinateur étant chargeable sur une unité de traitement de données et adapté pour entraîner la mise en œuvre d'au moins une étape d'un procédé tel que précédemment décrit lorsque le programme d'ordinateur est mis en œuvre sur l'unité de traitement des données.

D'autres caractéristiques et avantages de l'invention apparaîtront à la lecture de la description qui suit, de modes de réalisation de l'invention, donnée à titre d'exemple uniquement et en référence aux dessins qui sont :
- figure 1, une représentation schématique d'une infrastructure de communication comportant des terminaux et un relais, et
- figure 2, une vue schématique d'un terminal faisant partie de l'infrastructure de communication.

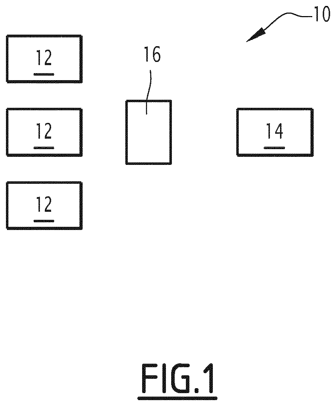

Un exemple d'infrastructure de communication 10 est représenté sur la figure 1.

L'infrastructure 10 comporte des terminaux privés 12, un terminal public 14 et un relais 16.

Selon l'exemple proposé, l'infrastructure 10 comporte trois terminaux privés 12.

Toutefois, d'autres nombres de terminaux privés 12 sont envisageables. En particulier, l'infrastructure 10 peut comporter un nombre de terminaux privés 12 supérieur ou égal à 10.

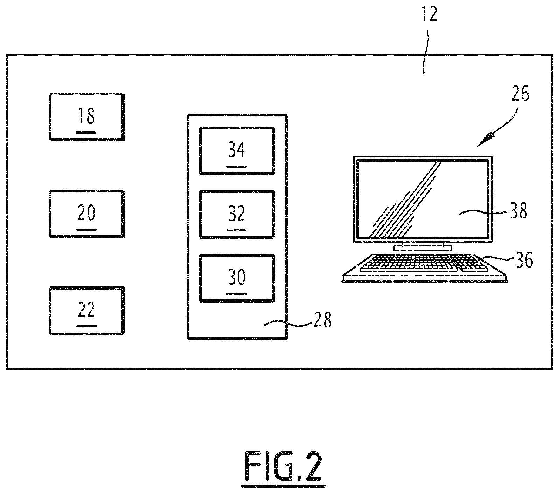

Un exemple de terminal privé 12 est représenté à la figure 2.

Le terminal privé 12 comporte un émetteur 18, un récepteur 20, une unité cryptographique 22 et un système 26 capable d'interagir avec un produit programme d'ordinateur.

L'émetteur 18 est propre à émettre des données à destination du relais.

Le récepteur 20 est propre à recevoir des données, notamment en provenance du relais 16.

L'unité cryptographique 22 est propre à chiffrer des données, notamment des données privées provenant du système 26.

L'unité cryptographique 22 est également propre à déchiffrer des données, notamment des données reçues par le récepteur 20.

Le système 26 est un ordinateur.

Plus généralement, le système 26 est un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le système 26 comporte un processeur 28 comprenant une unité de traitement de données 30, des mémoires 32 et un lecteur de support d'informations 34. Le système 26 comprend également un clavier 36 et une unité d'affichage 38.

Le produit programme d'ordinateur comporte un support lisible d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « floppy disk »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données 30 et est adapté pour entraîner la mise en œuvre de calculs ou d'opérations spécifiques lorsque le programme d'ordinateur est mis en œuvre sur l'unité de traitement des données 30.

Selon l'exemple proposé, au moins une mémoire 32 mémorise un modèle privé.

Chaque modèle privé est, selon l'exemple décrit, un modèle issu d'une technique d'apprentissage appliquée sur un jeu de données privées.

La technique d'apprentissage utilisée pour obtenir le modèle privé est indifférente. En particulier, la technique d'apprentissage peut être supervisée ou non.

Chaque modèle privé est un modèle de prédiction, c'est-à-dire un modèle capable d'associer à des entrées (attributs dans le vocabulaire du domaine de l'intelligence artificielle) au moins une sortie (classes ou labels dans le vocabulaire du domaine de l'intelligence artificielle).

Les remarques valables pour un terminal privé 12 sont également valables pour le terminal public 14 sauf en ce qui concerne le contenu de la mémoire.

La mémoire 30 du terminal public 14 comporte un modèle public.

Les modèles privés et public n'ont pas la même architecture mais sont capables de réaliser les mêmes prédictions. Par exemple, un des modèles privés est un réseau de neurones, un autre un modèle linéaire et le dernier est un ensemble de forêts aléatoires. Cela permet, entre autre, de disposer de terminaux ayant des puissances de calcul différentes.

Pour certains modèles privés, il est, de préférence, choisi une architecture limitant la puissance de calcul requise.

Selon un mode de réalisation préféré, les modèles privés et public portent uniquement sur des entrées provenant de mesures physiques de capteurs.

Le relais 16 est propre à interagir avec chaque terminal 12 ou 14.

En particulier, le relais 16 est propre à recevoir des données provenant de chaque terminal 12 ou 14 et à effectuer des traitements, comme une agrégation, des données reçues.

Le fonctionnement de l'infrastructure 10 est maintenant décrit en référence à un exemple de mise en œuvre d'un procédé d'échanges de données entre les terminaux privés 12 et le terminal public 14.

Le terminal public 14 envoie une requête.

La requête est une demande d'obtention de sorties de chaque modèle privé M1, M2 et M3 pour plusieurs ensembles d'entrées DP1, ..., DPN.

Selon l'exemple décrit, la requête est adressée à chaque terminal privé 12.

Chaque terminal privé 12 reçoit la requête qui comporte en particulier les ensembles de données publiques DP1, ..., DPN.

Chaque terminal privé 12 applique alors le modèle privé M1, M2 ou M3 de la mémoire 30 sur les ensembles de données publiques DP1, ..., DPN.

L'application du modèle privé M1, M2 ou M3 permet d'obtenir sur chaque terminal privé 12 ou 14 un ensemble de sorties S1, ..., SN. Pour distinguer quel modèle a permis d'obtenir la sortie, le modèle est indiqué en indice. Ainsi, la i-ième sortie du j-ieme modèle est notée Si_{Mj}.

L'ensemble des sorties S1_{Mj}, ..., SN_{Mj} est codé par le terminal privé 12 pour obtenir des sorties codées SC1_{Mj}, ..., SCN_{Mj}.

Le codage est, dans l'exemple proposé, un chiffrement homomorphe utilisant une clé publique.

Un chiffrement homomorphe est un chiffrement qui possède des propriétés de commutation avec au moins une opération mathématique. Autrement formulé, le décodage du résultat d'une opération mathématique sur des données codées donne le même résultat que l'application de ladite opération mathématique sur les données.

Chaque terminal privé 12 envoie les sorties codées SC1_{Mj}, ..., SCN_{Mj} à destination du relais 16.

Le relais 16 reçoit les sorties codées SC1_{Mj}, ..., SCN_{Mj}.

Selon l'exemple proposé, le relais 16 dispose ainsi pour chaque ensemble de données publiques DPi de trois sorties codées qui sont SCi_{M1}, SCi_{M2} et SCi_{M3}.

Le relais 16 met alors en œuvre une sélection d'une sortie parmi les trois sorties codées que sont les sorties codées SCi_{M1}, SCi_{M2} et SCi_{M3}.

La sélection est, par exemple, mise en œuvre en utilisant un algorithme de vote avec ajout de bruit lors de la sélection.

L'introduction d'un tel bruit permet de garantir et de quantifier le fait que l'utilisateur final ne puisse pas remonter aux données privées ayant servi de données initiales d'apprentissage au sein de chaque terminal privé 12.

L'algorithme de vote permet de sélectionner une seule des sorties qui est ainsi la sortie codée sélectionnée correspondant à l'ensemble de données publiques DPi et est notée SCSi.

Il peut être noté à cette étape de sélection qu'un chiffrement homomorphe uniquement pour l'algorithme de vote est suffisant. Un chiffrement homomorphe pour l'ensemble des opérations mathématiques existantes n'est pas nécessaire.

A l'issue de l'étape de sélection, le relais 16 a donc pour chaque ensemble de données publiques DPi la sortie codée sélectionnée SCSi.

Le relais 16 transmet la sortie codée sélectionnée SCSi au terminal public 14.

Le terminal public 14 utilise alors une clé privée (associée à la clé publique) pour décoder chaque sortie codée sélectionnée SCSi pour obtenir une sortie publique SPi. Seul le terminal public 14 détient la clé privée.

Le terminal public 14 constitue alors un jeu public d'entraînement JE comportant les données publiques DP1, ..., DPN ainsi que les sorties publiques SP1, ..., SPN.

Le terminal public 14 met alors en œuvre une étape d'apprentissage du modèle public MP sur la base du jeu public d'entraînement JE.

Le relais 16 effectue ainsi des opérations uniquement sur des données codées.

Plus exactement, cela garantit la confidentialité des données privées.

Cela empêche d'une part que le relais 16 ait accès aux modèles privés et d'autre part que le relais 16 puisse déduire les données privées ayant permis d'obtenir les modèles privés. La confidentialité des modèles est ainsi assurée.

Le relais 16 n'a donc pas à être un tiers de confiance.

Par ailleurs, le procédé est utilisable pour un nombre quelconque de terminaux privés 12.

Le procédé n'impose pas que les modèles privés et public partagent la même structure pourvu que chaque modèle privé soit capable de répondre à la requête du terminal public 14.

Ainsi, le procédé offre la possibilité à un nombre quelconque de terminaux privés 12 d'obtenir un modèle d'apprentissage public de meilleure qualité que les modèles privés parce que le modèle d'apprentissage public bénéficie de l'apport de chacun des jeux privés.

Le procédé permet donc d'assurer un apprentissage fédéré sur la base de données privées sans donner accès à des tiers auxdites données privées ni d'inférer des informations sur les données privées susmentionnées.

Un tel procédé est utilisable dans de nombreux contextes parmi lesquels : la reconnaissance de modulation de radiocommunication, la détection d'attaque cyber ou la maintenance prédictive.

D'autres modes de réalisation du procédé sont envisageables selon la confidentialité entre les terminaux privés 12 et le terminal public 14.

Selon un exemple, le terminal public 14 communique aux terminaux privés 12 l'architecture du modèle sans paramètres initiaux. Par exemple, il est communiqué que le modèle est un réseau de neurones.

Selon un autre cas, le terminal public 14 communique aux terminaux privés 12, en plus de l'architecture du modèle avec des paramètres initiaux. A titre d'illustration, les le terminal public 14 transmet les poids obtenus par un entraînement préalable en vue d'un réapprentissage. Dans chacun des cas, il n'est pas possible d'accéder aux données privées ayant servi à l'apprentissage, ce qui garantit une confidentialité par rapport au relais 16.

## Revendications

1. Procédé d'échange de données entre des premiers terminaux (12) et un deuxième terminal (14) via un relais (16), chaque premier terminal (12) comportant un premier émetteur (18), un premier récepteur (20) et une première mémoire (30), chaque première mémoire (30) mémorisant un premier modèle respectif, chaque premier modèle associant à des entrées au moins une sortie, chaque premier modèle étant issu d'un apprentissage réalisé à l'aide d'une base de données privées, le deuxième terminal (14) comportant un deuxième émetteur (18), un deuxième récepteur (20) et une deuxième mémoire (30), le procédé comportant au moins une étape de :
- réception d'une requête demandant, pour une pluralité d'ensemble d'entrées, la au moins une sortie associée par le premier modèle mémorisé par la première mémoire (30) du premier terminal (12), l'étape de réception étant mise en œuvre par chaque premier terminal (12),
- calcul par le premier modèle de la au moins une sortie pour chaque ensemble d'entrées de la requête reçue, pour obtenir un ensemble de sorties, l'étape de calcul étant mise en œuvre par chaque premier terminal (12),
- codage de chaque sortie, pour obtenir une pluralité de sorties codées, l'étape de codage étant mise en œuvre par chaque premier terminal (12),
- pour chaque ensemble d'entrées, sélection parmi les sorties codées provenant de chaque premier modèle des premiers terminaux (12) d'une sortie codée, l'étape de sélection étant mise en œuvre par le relais (16),
- décodage de chaque sortie codée sélectionnée, l'étape de décodage étant mise en œuvre par le deuxième terminal (14),
- constitution d'un ensemble de données formé par l'ensemble des sorties décodées et ensemble d'entrées associées, l'étape de constitution étant mise en œuvre par le deuxième terminal (14), et
- apprentissage d'un deuxième modèle associant à des entrées au moins une sortie, l'apprentissage étant effectué à partir de l'ensemble de données constitué, l'étape d'apprentissage étant mise en œuvre par le deuxième terminal (14).

2. Procédé selon la revendication 1, dans lequel, lors de l'étape de codage, le codage est un chiffrement homomorphe.

3. Procédé selon la revendication 1 ou 2, dans lequel, le deuxième modèle présente une architecture et des poids, le procédé comportant, en outre, pour chaque premier terminal (12) d'une étape de réception d'au moins un parmi l'architecture et les poids provenant du deuxième terminal (14) à travers le relais (16).

4. Procédé selon l'une quelconque des revendications 1 à 3, dans lequel lors de l'étape de sélection, une technique de vote avec ajout de bruit est utilisée.

5. Procédé selon l'une quelconque des revendications 1 à 4, dans lequel, chaque modèle est distinct.

6. Terminal (12) comportant un émetteur (18), un récepteur (20), une unité cryptographique (22), une mémoire (30) et un contrôleur (26), la mémoire mémorisant un modèle, chaque modèle associant à des entrées au moins une sortie, le terminal (12) étant propre à :
- recevoir à l'aide du récepteur (20) une requête demandant, pour une pluralité d'ensemble d'entrées, la au moins une sortie associée par le modèle mémorisé par la mémoire (30) du terminal (12),
- calculer avec le modèle la au moins une sortie pour chaque ensemble d'entrées de la requête reçue à l'aide du contrôleur (26), pour obtenir un ensemble de sorties, et
- coder chaque sortie à l'aide de l'unité de cryptographie (22), pour obtenir une pluralité de sorties codées.

7. Terminal (14) comportant un émetteur (18), un récepteur (20), une unité cryptographique (22), une mémoire (30) et un contrôleur (26), le terminal (14) étant propre à échanger des données avec d'autres terminaux (12), dit terminaux privés, chaque terminal privé (12) comportant un émetteur (18), un récepteur (20), une unité cryptographique (22), une mémoire (30) et un contrôleur (26), chaque mémoire d'un terminal privé (12) mémorisant un modèle privé, chaque modèle privé associant à des entrées au moins une sortie, le terminal (14) étant propre à :
- émettre à destination d'un relais (16) une requête demandant, pour une pluralité d'ensemble d'entrées, la au moins une sortie associée par le modèle privé mémorisé par la mémoire (30) de chaque terminal privé (12),
- décoder chaque sortie codée sélectionnée, les sorties codées sélectionnées étant obtenues par sélection d'une sortie codée pour chaque ensemble d'entrées parmi les sorties codées provenant de chaque modèle privé des terminaux privés (12) suite à l'émission de la requête,
- constituer un ensemble de données formé par l'ensemble des sorties décodées et ensemble d'entrées associées, et
- apprendre un deuxième modèle associant à des entrées au moins une sortie, l'apprentissage étant effectué à partir de l'ensemble de données constitué, l'étape d'apprentissage étant mise en œuvre par le deuxième terminal (14).

8. Infrastructure de communication (10) comportant des premiers terminaux (12), un deuxième terminal (14) et un relais (16), chaque premier terminal (12) comportant un premier émetteur (18), un premier récepteur (20) et une première mémoire (30), chaque première mémoire (30) mémorisant un premier modèle respectif, chaque premier modèle associant à des entrées au moins une sortie, le deuxième terminal (14) comportant un deuxième émetteur (18), un deuxième récepteur (20) et une deuxième mémoire (30), l'infrastructure étant propre à mettre en œuvre un procédé d'échange de données entre les premiers terminaux (12) et le deuxième terminal (14) via un relais (16), le procédé comportant au moins une étape :
- réception d'une requête demandant, pour une pluralité d'ensemble d'entrées, la au moins une sortie associée par le premier modèle mémorisé par la première mémoire (30) du premier terminal (12), l'étape de réception étant mise en œuvre par chaque premier terminal (12),
- calcul par le premier modèle de la au moins une sortie pour chaque ensemble d'entrées de la requête reçue, pour obtenir un ensemble de sorties, l'étape de calcul étant mise en œuvre par chaque premier terminal (12),
- codage de chaque sortie, pour obtenir une pluralité de sorties codées, l'étape de codage étant mise en œuvre par chaque premier terminal (12),
- pour chaque ensemble d'entrées, sélection parmi les sorties codées provenant de chaque premier modèle des premiers terminaux (12) d'une sortie codée, l'étape de sélection étant mise en œuvre par le relais (16),
- décodage de chaque sortie codée sélectionnée, l'étape de décodage étant mise en œuvre par le deuxième terminal (14),
- constitution d'un ensemble de données formé par l'ensemble des sorties décodées et ensemble d'entrées associées, l'étape de constitution étant mise en œuvre par le deuxième terminal (14), et
- apprentissage d'un modèle d'apprentissage à partir de l'ensemble de données constitué, l'étape d'apprentissage étant mise en œuvre par le deuxième terminal (14).

9. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape d'un procédé selon l'une quelconque des revendications 1 à 6 lorsque le programme d'ordinateur est mis en œuvre sur l'unité de traitement des données.

10. Support lisible d'informations comportant des instructions de programme formant un programme d'ordinateur, le programme d'ordinateur étant chargeable sur une unité de traitement de données et adapté pour entraîner la mise en œuvre d'au moins une étape d'un procédé selon l'une quelconque des revendications 1 à 6 lorsque le programme d'ordinateur est mis en œuvre sur l'unité de traitement des données.
